# EUROPÄISCHE PATENTANMELDUNG

(11) **EP 4 703 722 A1**
(43) Veröffentlichungstag der Anmeldung: **04.03.2026**
(21) Anmeldenummer: 24198094.5
(22) Anmeldetag: 03.09.2024
(51) Int. Cl.: G01N 29/04, G01N 29/44

(54) **SCHWEISSNAHTBEWERTUNG**

(71) Anmelder: Georg Fischer Rohrleitungssysteme AG, 8201 Schaffhausen (CH)
(72) Erfinder: Barbone, Riccardo, 8200 Schaffhausen (CH)
(74) Vertreter: Fenner, Seraina

(57) **Zusammenfassung**

Computer implementiertes Verfahren und System zur Bewertung einer nicht zerstörenden Ultraschallprüfung einer Kunststoffrohrverschweissung das folgende Schritte beinhaltet:
• Empfangen einer Ultraschallscandatei mittels eines Servers,
• Analysieren der Ultraschallscandatei auf der Grundlage vordefinierter Kriterien durch eine Recheneinheit, wobei die Recheneinheit ein neuronales Netzwerk umfasst,
• Bewerten der Ultraschallscandatei durch die Recheneinheit aufgrund der vordefinierten Kriterien.

## Beschreibung

Die Erfindung betrifft ein Computer implementiertes Verfahren zur Bewertung einer nicht zerstörenden Ultraschallprüfung einer Kunststoffrohrverschweissung, ein System zur Bewertung einer nicht zerstörenden Ultraschallprüfung einer Kunststoffrohrverschweissung und ein Verfahren zum Trainieren eines neuronalen Netzwerks zur Verwendung in einem Verfahren zur Bewertung einer nicht zerstörenden Ultraschallprüfung einer Kunststoffrohrverschweissung.

Heutzutage werden auf Baustellen durchgeführte Schweissungen von Kunststoffrohrleitungen durch eine Ultraschallprüfung geprüft, wobei die Ultraschallprüfung durch einen Inspektor durchgeführt wird, der anhand des Ultraschallscans beurteilt, ob die Schweissung den Anforderungen entspricht und bestanden hat oder nicht den Anforderungen entspricht und nicht bestanden hat. Wobei der Inspektor vor Ort die Beurteilung meist nicht selbst durchführt, sondern den Ultraschallscan an eine Prüfstelle weiterleitet, die den Ultraschallscan visuell durch eine Sichtprüfung durch einen Prüfer bewertet und dem Inspektor eine Beurteilung, ob die Schweissnaht bestanden oder nicht bestanden hat, zusendet. Der Nachteil dabei ist, dass die Beurteilung meist Stunden oder sogar Tage verzögert beim Inspektor ankommt und er bei einer negativen Beurteilung eine erneute Schweissung und darauffolgende Prüfung durchführen bzw. beauftragen muss und somit wieder die Baustelle aufsuchen muss, was alles sehr zeit- und kostenintensiv ist.

Die EP 3 815 884 A1 offenbart ein Verfahren zur Prüfung einer Schweissung bei dem mittels eines Datenverarbeitungsgeräts die durchgeführte Schweissung aufgezeichnet wird, wie auch die Fehlstellen mittels Ultraschalls erfasst und gespeichert werden.

Nachteilig hierbei ist, dass keine direkte Beurteilung der Schweissnaht durch das System erfolgt, sondern der Inspektor die Ultraschallprüfung der Prüfstelle zur Beurteilung zusenden muss bzw. die Prüfstelle anweisen muss die ins webbasierte Tool eingespeisten Daten zu prüfen und zu bewerten, was meist Stunden oder Tage Verzögerung hervorruft.

Es ist Aufgabe der Erfindung ein Computer implementiertes Verfahren, ein damit verbundenes System und ein Verfahren zum Trainieren eines neuronalen Netzwerks vorzuschlagen, dass eine Bewertung eines Ultraschallscans einer Kunststoffrohrverschweissung in Echtzeit liefert und dadurch Auswertungszeiten der Ultraschallscans wesentlich reduziert werden können.

Diese Aufgabe wird erfindungsgemäss dadurch gelöst, dass ein Computer implementiertes Verfahren zur Bewertung einer nicht zerstörenden Ultraschallprüfung einer Kunststoffrohrverschweissung folgende Schritte beinhaltet:
- Empfangen einer Ultraschallscandatei mittels eines Servers,
- Analysieren der Ultraschallscandatei auf der Grundlage vordefinierter Kriterien durch die Recheneinheit, wobei die Recheneinheit ein neuronales Netzwerk umfasst,
- Bewerten der Ultraschallscandatei durch die Recheneinheit aufgrund der vordefinierten Kriterien.

Das erfindungsgemässe Computer implementierte Verfahren zur Bewertung einer nicht zerstörenden Ultraschallprüfung einer Kunststoffrohrverschweissung beinhaltet ein Empfangen einer Ultraschallscandatei mittels eines Servers. Der Server kann eine Recheneinheit und/oder einen Speicher beinhalten, wie auch als GPU ausgebildet sein. Die Ultraschallscandatei kann direkt von einem Ultraschallscanner an den Server übermittelt werden, wie auch anderweitig an den Server geschickt oder übertragen werden, beispielsweise mithilfe eines USB-Sticks oder per Bluetooth, wobei es vorteilhaft ist, wenn der Server webbasiert ist und somit übers Internet auf den Server zugegriffen werden kann und die Ultraschallscandateien übermittelt und vom Server empfangen werden können. Wobei es sich bei einer Ultraschallscandatei um eine Abbildung eines Ultraschallscans einer Kunststoffrohrverschweissung, der zu prüfenden Verschweissung handelt. Vorzugsweise zeigt die Ultraschallscandatei die komplette rundumverlaufende Schweissung, die sich über 360° erstreckt. Das erfindungsgemässe Computer implementierte Verfahren beinhaltet, dass die Ultraschallscandatei von einer Recheneinheit aufgrund vordefinierter Kriterien analysiert wird. Vorzugsweise ist die Recheneinheit Bestandteil des Servers, sie kann aber auch autonom ausgebildet sein. Die Recheneinheit umfasst ein neuronales Netzwerk bzw. einen Lernalgorithmus, vorzugsweise ein konvolutionales neuronales Netzwerk (CNN) mittels dem die Ultraschallscandateien analysiert und bewertet werden. Aufgrund der Bewertung der Ultraschallscandatei auf der Basis der vordefinierten Kriterien erfolgt die abschliessende Bewertung, vorzugsweise in "bestanden" oder "nicht bestanden".

Vorzugsweise werden die Ultraschallscandateien auf dem Server oder einem alternativen Speichermodul gespeichert.

Vorzugsweise sind die vordefinierten Kriterien und Sub-Kriterien in einer Datenbank auf dem Server oder einem alternativen Speichermodul gespeichert und werden laufend durch neuen Ultraschallscandateien und deren Bewertung erweitert. Wobei die Datenbank auch auf einem anderen Ort als dem Server gespeichert sein kann.

Es ist vorteilhaft, wenn die Kriterien in Prüfgruppen unterteilt sind. Dies erlaubt eine effiziente Prüfung und eine schnelle Bewertung durch die Recheneinheit, so dass qualitativ schlechte Ultraschallscandateien erst gar nicht auf die Qualität der Schweissung geprüft werden, sondern die Bewertung schon frühzeitig abgebrochen wird.

Vorzugsweise definiert eine Prüfgruppe die Qualität der Ultraschallscandatei. Es ist vorteilhaft, wenn die Recheneinheit vorzugsweise mittels des neuronalen Netzwerks, die Ultraschallscandatei zuerst auf die Prüfgruppe der Qualität der Ultraschallscandatei bewertet. Wird die Ultraschallscandatei derart bewertet, dass sie als "nicht bestanden" eingestuft wird, wird die Prüfung abgebrochen und es wird ein Hinweis ausgegeben, dass die Ultraschallscandatei "nicht bestanden" hat. Dieser Hinweis wird vorzugsweise direkt über ein Anzeigegerät dem Inspektor vor Ort angezeigt wie auch bei Bedarf der Prüfstelle über die webbasierte Plattform weitergegeben. Aufgrund dessen nochmals eine Ultraschallprüfung erfolgt und eine neue Ultraschallscandatei dem Sever übermittelt wird um diese dann durch die Recheneinheit zu analysieren und zu bewerten.

Es ist vorteilhaft, wenn die Qualität der Ultraschallscandatei unteranderem aufgrund des Kriteriums des Verlaufs der angezeigten Welle in der Ultraschallscandatei zur äusseren Oberfläche der Schweissnaht und des Rohres bewertet wird. Vorzugsweise fallen darunter Sub-Kriterien, ob die Welle kontinuierlich ohne Unterbrüche verläuft, ob die Welle einheitlich ausgebildet ist, wie auch ob Kratzer in der Welle ersichtlich sind. Selbstverständlich ist die Liste nicht abschliessend und kann mit weiteren Sub-Kriterien ergänzt werden.

Vorzugsweise wird die Qualität der Ultraschallscandatei unteranderem aufgrund des Kriteriums des Verlaufs der angezeigten Welle in der Ultraschallscandatei zur inneren Oberfläche der Schweissnaht und des Rohres bewertet. Vorzugsweise fallen darunter Sub-Kriterien, ob die Welle kontinuierlich ohne Unterbrüche verläuft, ob die Welle einheitlich ausgebildet ist, wie auch ob Kratzer in der Welle ersichtlich sind. Selbstverständlich ist die Liste nicht abschliessend und kann mit weiteren Sub-Kriterien ergänzt werden.

Es ist vorteilhaft, wenn die Qualität des Ultraschallscandatei unteranderem aufgrund des Kriteriums des Verlaufs der Wandstärke in der Ultraschallscandatei der Schweissnaht und des Rohres bewertet wird. Vorzugsweise fällt darunter das Sub-Kriterien, ob die Wandstärke konstant über die Ultraschallscandatei verläuft, bzw. gleich breit ist. Zudem kann als weiteres Sub-Kriterium auch die Wandstärke auf Unregelmässigkeiten im Ultraschallscan geprüft und bewertet werden. Selbstverständlich ist die Liste nicht abschliessend und kann mit weiteren Sub-Kriterien ergänzt werden.

Es ist vorteilhaft, wenn die Qualität des Ultraschallscandatei unteranderem aufgrund des Kriteriums des Vorliegens eines Heizdrahts in der Ultraschallscandatei beinhaltet. Dieses Kriterium wird dann angewandt, wenn eine Ultraschallprüfung einer Verschweissung mittels Elektroschweissmuffe vorliegt. Vorzugsweise wird auch die Anzahl der erkennbaren Heizdrähte bzw. Wicklungen geprüft wie auch die Dicke bzw. der Durchmesser des vorliegenden Heizdrahts. Kann die Recheneinheit dies nicht erkennen wird die Ultraschallscandatei als unzureichend eingestuft und muss neu erstellt werden.

Es ist vorteilhaft, wenn die Qualität der Ultraschallscandatei unteranderem aufgrund des Kriteriums, ob Kaltzonen in der Ultraschallscandatei erkennbar sind, beurteilt wird. Zudem ist es vorteilhaft die Länge der Kaltzonen als Qualitätskriterium für den Ultraschallscan mitaufzunehmen.

Es ist vorteilhaft, wenn die Qualität der Ultraschallscandatei unteranderem aufgrund des Kriteriums der Einstellungen des durchgeführten Ultraschallscans der Schweissnaht und des Rohres bewertet wird. Vorzugsweise fällt darunter das Sub-Kriterien, der Geschwindigkeit der Erstellung der Ultraschallscandatei sowie das Erkennen der Null-Linie bzw. die Kalibrierung des Ultraschallscanners zum korrekten Erfassen der Ultraschallscandatei. Selbstverständlich ist die Liste nicht abschliessend und kann mit weiteren Sub-Kriterien ergänzt werden.

Es hat sich als vorteilhaft gezeigt, wenn die Bewertung der einzelnen Kriterien anhand eines prozentualen Abzugs ausgehend einer Basis von 100% erfolgt. Das heisst, beispielsweise wird in der Prüfgruppe der Qualität über die Ultraschallscandatei das Kriterium der äusseren Oberfläche geprüft und die Recheneinheit erkennt, dass der Verlauf der Welle nicht durchgehend ist, so wird aufgrund der Fehlstellen in der Welle eine Bewertung ausgegeben von beispielsweise 2%, die dann vom ausgehenden optimalen Basiswert von 100% abgezogen wird.

Es ist vorteilhaft, wenn eine solche Bewertung zu jedem Kriterium oder Sub-Kriterium durch die Recheneinheit durchgeführt wird.

Als vorteilhaft hat sich gezeigt, wenn die Recheneinheit bei einer nicht bestandenen Prüfung zur Qualität der Ultraschalldatei Vorschläge zur Erreichung einer ausreichenden Qualität der Ultraschallscandatei ausgibt, beispielsweis reinigen der Prüfstelle, etc.

Vorzugsweise wird nach dem Prüfen und Bewerten der Kriterien der Prüfgruppe für die Qualität der Ultraschallscandatei die Prüfung und Bewertung der Kriterien der Prüfgruppe zur Qualität der Schweissung mittels des erfindungsgemässen Computer implementierten Verfahrens durchgeführt.

Als bevorzugte Ausführungsform hat sich gezeigt, wenn die Qualität der Schweissung aufgrund mindestens einem der Kriterien der Anomalien, Defekte oder uneinheitliche, nicht erwartete Strukturen in der Ultraschallscandatei, kein Heizdraht erkennbar geprüft und bewertet wird. Selbstverständlich ist die Liste nicht abschliessend und kann mit weiteren Kriterien ergänzt werden.

Vorzugsweise wird die Ultraschallprüfung zum Erstellen der Ultraschallscandatei mittels der Time of Flight Diffraction (TOFD) oder der Phased Array Ultraschallprüfung (PAUT) durchgeführt.

Vorzugsweise werden Stumpfschweissung, Elektroschweissungen mit Elektroschweissmuffen wie auch andere Kunststoffrohrverschweissungen bewertet. Entsprechend der zu analysierenden Kunststoffrohrverschweissung werden die vordefinierten Kriterien festgelegt, dass beispielsweise eine Heizdrahtüberprüfung nur dort angewandt wird, wo auch ein Heizdraht verwendet wird.

Diese Aufgabe wird erfindungsgemäss auch durch ein erfindungsgemässes System zur Bewertung einer nicht zerstörenden Ultraschallprüfung einer Kunststoffrohrverschweissung beinhaltend einen Ultraschallscanner zum Durchführen eines Ultraschallscans einer Kunststoffrohrverschweissung und zum Erstellen einer Ultraschallscandatei, einen Server, zum Empfangen der Ultraschallscandatei, eine Recheneinheit zum Analysieren der Ultraschallscandatei und zur Bewertung der Ultraschallscandatei aufgrund der vordefinierten Kriterien, wobei die Recheneinheit ein neuronales Netzwerk umfasst und eine Ausgabeeinheit zur Anzeige der Bewertung, gelöst. Vorzugsweise erfolgt die abschliessende Bewertung in "bestanden" oder "nicht bestanden". Das durch den Ultraschallscanner erfasste Ultraschallbild der Verschweissung wird an einen Server übermittelt bzw. wird von diesem Empfangen. Vorzugsweise wird dazu eine webbasierte Plattform verwendet, an die die Ultraschallscandatei gesandt wird, wobei die Ultraschallscandatei auch anderweitig an den Server übermittelt werden kann. Es ist vorteilhaft, wenn der Server eine Recheneinheit und einen Speicher aufweist, jedoch können die Einheiten auch getrennt voneinander angeordnet sein. Eine Recheneinheit analysiert und bewertet die Ultraschallscandatei aufgrund der Kriterien, die bereits im obigen Text zum Computer implementierten Verfahren aufgelistet wurden. Die Recheneinheit analysiert und bewertet die Kriterien mittels eines neuronalen Netzwerkes. Die Bewertung wird dem Inspektor vor Ort auf einer Ausgabeeinheit mitgeteilt.

Es ist vorteilhaft, wenn der Server eine webbasierte Schnittstelle aufweist. Dadurch kann vom Inspektor auf der Baustelle vor Ort wie auch von der entfernten Prüfstelle auf die Ultraschallscandatei zugegriffen werden.

Diese Aufgabe wird erfindungsgemäss auch dadurch gelöst, dass ein erfindungsgemässes Verfahren zum Trainieren eines neuronalen Netzwerks zur Verwendung in einem Verfahren zur Bewertung einer nicht zerstörenden Ultraschallprüfung einer Kunststoffrohrverschweissung das folgende Schritte beinhaltet:
- Erstellen von simulierten Ultraschallscandateien mittels des neuronalen Netzwerks der Recheneinheit aufgrund bekannter Ultraschallscandateien unterschiedlicher Materialien,
- Bewerten der Ultraschallscandateien aufgrund der Kriterien,
- Kontinuierliche Erweiterung des neuronalen Netzwerks aufgrund der simulierten Ultraschallscandateien.

Vorzugsweise weist der Server bzw. die Recheneinheit eine Simuliereinheit auf mit der weitere Ultraschalldateien aufgrund bekannter Materialen mit Hilfe des neuronalen Netzwerks erstellt werden können, wodurch sich die Vielfalt der Ultraschalldateien zum Heranziehen der Bewertungen vergrössert und die Datenbank erweitert wird. Hierdurch können hauptsächlich Zwischenbereiche verkleinert werden, wodurch sichergestellt wird, dass keine indifferenten Bewertungen erstellt werden.

Es ist vorteilhaft, wenn das Verfahren zum Trainieren eines neuronalen Netzwerks zur Verwendung in einem Verfahren zur Bewertung einer nicht zerstörenden Ultraschallprüfung einer Kunststoffrohrverschweissung als vordefiniertes Kriterium mindestens einer der folgenden Kriterien aufweist: einen Verlauf der angezeigten Welle in der Ultraschallscandatei zur äusseren oder inneren Oberfläche der Schweissnaht und des Rohres, einen Verlauf der Wandstärke in der Ultraschallscandatei der Schweissnaht und des Rohres, eine Anomalie, ein Defekt oder eine uneinheitliche, nicht erwartete Struktur in der Ultraschallscandatei oder dass kein Heizdraht vorliegt. Selbstverständlich können noch weitere Kriterien zum Trainieren des neuronalen Netzwerks herangezogen werden, wie auch die zuvor in Bezug auf das Verfahren erwähnten Kriterien zum Trainieren des neuronalen Netzwerks herangezogen werden können..

Es ist vorteilhaft, wenn ein Training bzw. eine Erweiterung der Datenbank periodisch durchgeführt wird oder dies auch automatisch bei jeder neuen Bewertung einer Ultraschallscandatei erfolgt.

Als vorteilhaft hat sich gezeigt, wenn das neuronale Netzwerk ein konvolutionales neuronales Netzwerk (CNN) ist. Das neuronale Netzwerk bzw. der Lernalgorithmus ist darauf trainiert die Ultraschallscandatei der Schweissung als Eingabe zu erhalten, um daraus vergleichbare Kriterien der vorliegenden Ultraschallscandateien zu ermitteln. Vorzugsweise können auch Einstellwerte, Materialdaten oder Schweissparameter zur Unterstützung herangezogen werden, welche ebenfalls im neuronalen Netzwerk vorliegen können.

Alle Ausgestaltungmöglichkeiten sind untereinander frei kombinierbar sowie zur Vermeidung von Wiederholungen sich die Merkmale des Computer implementierten Verfahrens und des Systems auch automatisch auf das Verfahren zum Trainieren und umgekehrt beziehen.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: ein Ablaufdiagramm des erfindungsgemässen Computer implementierten Verfahrens und
- Fig. 2: eine Ultraschalldatei mit markierten Fehlstellen.

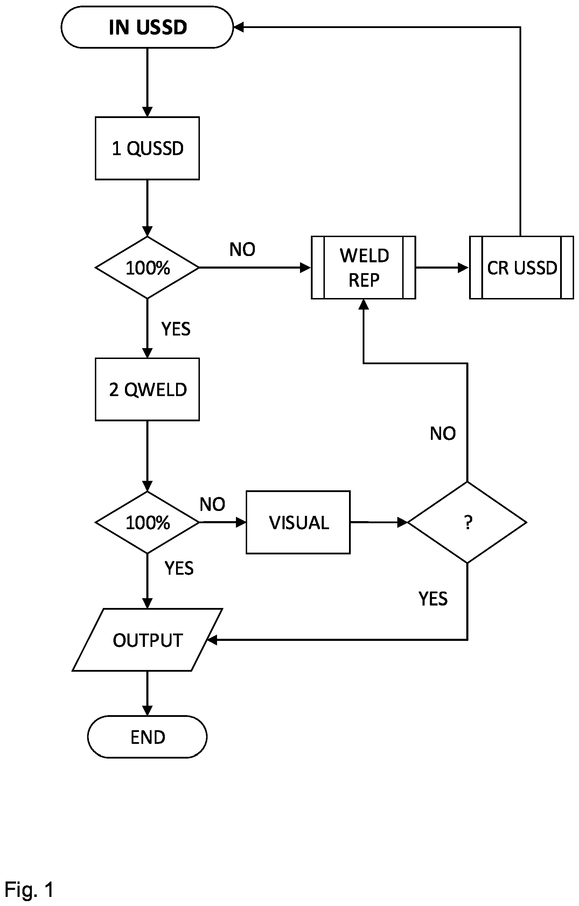

Die in Fig. 1 zeigt ein Ablaufdiagramm eines erfindungsgemässen Computer implementierten Verfahrens zur Bewertung einer nicht zerstörenden Ultraschallprüfung einer Kunststoffrohrverschweissung. Die Ultraschalldatei USSD wird mittels eines Servers empfangen IN USSD. Anschliessend wird mit einer Recheneinheit eine Analyse und Bewertung vordefinierter Kriterien durchgeführt. Wobei die Analyse und Bewertung 1 QUSSD sich auf die Qualität der Ultraschalldatei USSD bezieht, um sicherzustellen, dass eine weitere Auswertung der Schweissung nur mit einer den Anforderungen entsprechenden Ultraschallscandateien durchgeführt wird. Somit beziehen sich die Kriterien der 1 QUSSD der ersten Prüfgruppe auf die Qualität des Scan. Vorzugsweise sind die Kriterien zur Analyse und Bewertung der Ultraschallscandatei der Verlauf der angezeigten Welle in der Ultraschallscandatei zur äusseren und inneren Oberfläche der Schweissnaht und des Rohres und/oder der Verlauf der Wandstärke in der Ultraschallscandatei der Schweissnaht und des Rohres. Darunter fallen beispielsweise Sub-Kriterien, ob die Welle kontinuierlich ohne Unterbrüche verläuft, ob die Welle einheitlich ausgebildet ist, oder auch ob Kratzer in der Welle ersichtlich sind. Selbstverständlich ist die Liste nicht abschliessend und kann mit weiteren Sub-Kriterien ergänzt werden oder auch nur einzelne der aufgeführten Kriterien gewählt werden.

Als Sub-Kriterium des Verlaufs der Wandstärke in der Ultraschallscandatei der Schweissnaht und des Rohres wird beispielsweise analysiert und bewertet, ob die Wandstärke konstant über die Ultraschallscandatei verläuft. Zudem kann als weiteres Sub-Kriterium auch die Wandstärke auf Unregelmässigkeiten im Ultraschallscan geprüft und bewertet werden.

Es hat sich als vorteilhaft gezeigt, wenn die Bewertung der einzelnen Kriterien anhand eines prozentualen Abzugs ausgehend einer Basis von 100% erfolgt. Das heisst, beispielsweise wird in der Prüfgruppe der Qualität über die Ultraschallscandatei USSD das Kriterium der äusseren Oberfläche geprüft und die Recheneinheit erkennt, dass der Verlauf der Welle nicht durchgehend ist, so wird aufgrund der Fehlstellen in der Welle eine Bewertung ausgegeben beispielsweise 2%, die dann vom ausgehenden optimalen Basiswert von 100% abgezogen wird.

Für die erste Prüfgruppe über die Qualität der Ultraschallscandatei kann eine solche Bewertung wie folgt aussehen:

| **1. Prüfgruppe Qualität Ultraschallscandatei** | **Kriterien** | **Sub-Kriterien** | **Bewertung** |
|---|---|---|---|
| | | | |
| | Verlauf der angezeigten Welle in der Ultraschallscandatei der inneren Oberfläche | | |
| | | Welle kontinuierlich | 0 |
| | | Welle einheitlich ausgebildet | 2% |
| | | Kratzer in der Welle | 0 |
| | | | |
| | Verlauf der angezeigten Welle in der Ultraschallscandatei der äusseren Oberfläche | | |
| | | Welle kontinuierlich | 0 |
| | | Welle einheitlich ausgebildet | 0 |
| | | Kratzer in der Welle | 0 |
| | Verlauf der Wandstärke | | |
| | | Wandstärke konstanter verlauf | 2% |
| | | Unregelmässigkeiten in der Wandstärke | 0 |
| | | | |
| | Einstellungen Ultraschallscandatei | | |
| | | Geschwindigkeit | 4°,6 |
| | | Null-Linie vorhanden | 0 |
| | | | |
| | | | |
| | Total | | 92% |
| | Bewertung | | **nicht bestanden** |

Hier ist ersichtlich, dass die Bewertung ergeben hat, dass die Qualität der Ultraschallscandatei gemäss 1 QUSSD nicht ausreicht. Somit ist im Ablaufdiagramm Fig. 1 ersichtlich, dass hierauf der Schritt des Ersetzens der Schweissung WELD REP folgt und die Schweissstelle würde entfernt und neu erstellt werden. Anschliessen wird erneut eine Ultraschallprüfung CR USSD durchgeführt und die erstellte Ultraschallscandatei erneut dem Server übermittelt bzw. von diesem in Empfang genommen. Daraufhin durchläuft die Ultraschallscandatei erneut die erste Prüfung 1 QUSSD.

| **1. Prüfgruppe Qualität Ultraschallscandatei** | **Kriterien** | **Sub-Kriterien** | **Bewertung** |
|---|---|---|---|
| | | | |
| | Verlauf der angezeigten Welle in der Ultraschallscandatei der inneren Oberfläche | | |
| | | Welle kontinuierlich | 0% |
| | | Welle einheitlich ausgebildet | 0% |
| | | Kratzer in der Welle | 0% |
| | | | |
| | Verlauf der angezeigten Welle in der Ultraschallscandatei der äusseren Oberfläche | | |
| | | Welle kontinuierlich | 0% |
| | | Welle einheitlich ausgebildet | 0% |
| | | Kratzer in der Welle | 0% |
| | Verlauf der Wandstärke | | |
| | | Wandstärke konstanter verlauf | 0% |
| | | Unregelmässigkeiten in der Wandstärke | 0% |
| | | | |
| | Einstellungen Ultraschallscandatei | | |
| | | Geschwindigkeit | 0% |
| | | Null-Linie vorhanden | 0% |
| | | | |
| | | | |
| | Total | | 100% |
| | Bewertung | | **bestanden** |

Hier ist ersichtlich, dass die 100% erreicht sind und somit die erste Prüfung über die Qualität der Ultraschallscandatei bestanden wurde.

Darauf folgt die zweite Prüfung, die der Schweissung 2 QWELD. Auch hier werden die einzelnen Kriterien vorzugsweise mittels Prozentangaben bewertet. Treten beispielsweise Abnormalien auf, werden diese anhand ihrer, Grösse, Form und Menge mit einer entsprechenden Prozentzahl bewertet, welche dann die Kalkulation der Schweissung erlaubt.

| **2. Prüfgruppe Qualität Schweissung** | **Kriterien** | **Spezifikation** | **Bewertung** |
|---|---|---|---|
| | | | |
| | Anomalien | | |
| | | Mege | 6% |
| | | Grösse | 1% |
| | | Form | 3% |
| | Defekte | | |
| | | Mege | 0% |
| | | Grösse | 0% |
| | | Form | 0% |
| | uneinheitliche, nicht erwartete Strukturen | | |
| | | Mege | 1% |
| | | Grösse | 2% |
| | | Form | 1% |
| | | | |
| | | | |
| | Total | | 86% |
| | Bewertung | | **nicht bestanden** |

Das oben aufgeführte Beispiel zeigt eine Bewertung aufgrund derer die Schweissung nicht bestanden hat. Nach einer solchen Bewertung wir die Ultraschallscandatei USSD einer Prüfstelle übermittelt bzw. ist für die Prüfstelle auf der webbasierten Plattform bereitgestellt, um eine visuelle Prüfung durch die Prüfungsstelle vornehmen zu lassen. Die Prüfstelle bewertet dann die Ultraschallscandatei visuell durch einen menschlichen Prüfer. So wird die Bewertung des vom neuronalen Netzwerk als nicht bestandene Schweissung nun durch den Prüfer bewertet, welche schlussendlich massgebend ist, ob die Schweissung den Anforderungen entspricht und bestanden hat oder nicht den Anforderungen entspricht und die Schweissung entfernt werden muss und der Prozess von neuem begonnen wird.

Wenn die Schweissung von der Prüfstelle mit "YES" beurteilt wird, wird an der Ausgabeeinheit OUTPUT ausgegeben, dass die Schweissung bestanden hat, sei es durch ein digitales Anzeigegerät oder auch durch einen Ausdruck.

Bewertet das erfindungsgemässe System mit neuronalem Netzwerk die Schweissung mit 100%, ist eine Bewertung durch eine Prüfstelle nicht mehr notwendig und die Bewertung geht direkt an die Ausgabeeinheit OUTPUT mit einer Bewertung "bestanden", siehe unten in der Tabelle.

| **2. Prüfgruppe Qualität Schweissung** | **Kriterien** | **Spezifikation** | **Bewertung** |
|---|---|---|---|
| | | | |
| | Anomalien | | |
| | | Mege | 0% |
| | | Grösse | 0% |
| | | Form | 0% |
| | Defekte | | |
| | | Mege | 0% |
| | | Grösse | 0% |
| | | Form | 0% |
| | uneinheitliche, nicht erwartete Strukturen | | |
| | | Mege | 0% |
| | | Grösse | 0% |
| | | Form | 0% |
| | | | |
| | | | |
| | Total | | 100% |
| | Bewertung | | **bestanden** |

Selbstverständlich sind die Bewertungen individuell anpassbar. Es ist auch denkbar, dass man nicht 100% erreicht haben muss, um zu bestehen, sondern der Wert bei 90% oder sonst einem eigens festgelegten Wert liegen kann.

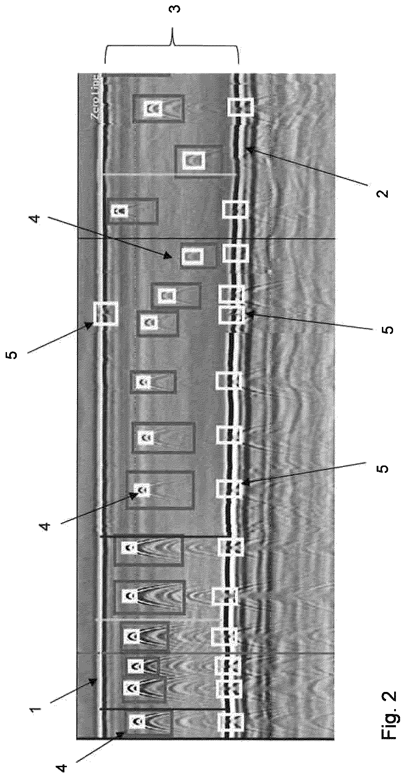

Fig. 2 zeigt eine Ultraschallscandatei USSD, wobei hier als Beispiel sowohl die erste wie auch die zweite Prüfung nicht bestehen würde und beide Prüfungen durchgeführt wurden, wobei in der Regel nach der ersten Prüfung zur Qualität des Scans abgebrochen werden würde, wenn diese nicht bestanden hätte. Gut ersichtlich ist der durchgehende und gleichmässige Verlauf der Welle der inneren und äusseren Oberfläche 1, 2, bis auf die Punkte 5, wo ersichtlich ist, dass die Oberflächen nicht durchgehend sind. Die Wandstärke verläuft jedoch konstant. Somit würden diese Kriterien und Sub-Kriterien mit einem bestimmten Prozentsatz bewertet werden und die erste Prüfung zur Qualität der Ultraschallscandatei wäre keine 100%, somit nicht bestanden. Jedoch zeigt die Ultraschallscandatei USSD auch einige Defekte im Gefüge auf, welche ebenfalls mit einem Rahmen umrandet wurden, wobei das Computer implementierte Verfahren vorzugsweise solche Stellen, wie in Fig. 2 ersichtlich durch Umrahmungen kennzeichnet. Das erfindungsgemässe Computer implementierte Verfahren hat die Defekte der Ultraschallscandatei USSD bewertet, wobei die Werte hier nicht vorliegen, aber der Endwert hat keine 100% bei der zweiten Prüfung zur Qualität der Schweissung erreicht und deshalb wurde die Ultraschallscandatei USSD an eine Prüfstelle übergeben, um eine visuelle Prüfung durch einen Prüfer vorzunehmen. Bei der hohen Anzahl an Defekten wurde auch bei diesem Testbild in Fig. 2 die Schweissung durch den Prüfer als nicht bestanden bewertet und der Inspector angewiesen die Schweissung zu entfernen und erneut prüfen zu lassen.

Es ist vorteilhaft, wenn die Qualität der Ultraschallscandatei aufgrund des Kriteriums der Einstellungen des durchgeführten Ultraschallscans der Schweissnaht und des Rohres bewertet wird. Vorzugsweise fällt darunter das Sub-Kriterien, der Geschwindigkeit der Erstellung der Ultraschallscandatei sowie das Erkennen der Null-Linie bzw. die Kalibrierung des Ultraschallscanners zum korrekten Erfassen der Ultraschallscandatei. Selbstverständlich ist die Liste nicht abschliessend und kann mit weiteren Sub-Kriterien ergänzt werden.

### Bezugszeichenliste

- USSD: Ultraschalldatei
- IN USSSD: Empfangen einer Ultraschallscandatei
- 1 QUSSD: Erste Prüfgruppe, Qualität der Ultraschallscandatei
- 2 QWELD: Zweite Prüfgruppe, Qualität der Schweissung
- WELD REP: Schweissung ersetzen
- CR USSD: Erstellen einer Ultraschallscandatei
- VISUAL: Visuelle Bewertung durch Prüfstelle
- OUTPUT: Ausgabe der Bewertung

- 1: Welle der inneren Oberfläche
- 2: Welle der äusseren Oberfläche
- 3: Wandstärke
- 4: Defekt
- 5: Kein konstanter Verlauf der Wandstärke

## Patentansprüche

1. Computer implementiertes Verfahren zur Bewertung einer nicht zerstörenden Ultraschallprüfung einer Kunststoffrohrverschweissung das folgende Schritte beinhaltet:
• Empfangen einer Ultraschallscandatei (USSD) mittels eines Servers,
• Analysieren der Ultraschallscandatei (USSD) auf der Grundlage vordefinierter Kriterien durch eine Recheneinheit, wobei die Recheneinheit ein neuronales Netzwerk umfasst,
• Bewerten der Ultraschallscandatei (USSD) durch die Recheneinheit aufgrund der vordefinierten Kriterien.

2. Computer implementiertes Verfahren nach Anspruch 1, **dadurch gekennzeichnet, dass** die Kriterien in Prüfgruppen (1 QUSSD, 2 QWELD) unterteilt werden.

3. Computer implementiertes Verfahren nach Anspruch 2, **dadurch gekennzeichnet, dass** eine Prüfgruppe die Qualität der Ultraschallscandatei (1 QUSSD) definiert.

4. Computer implementiertes Verfahren nach Anspruch 3, **dadurch gekennzeichnet, dass** die Bewertung zur Qualität der Ultraschallscandatei (USSD) das Kriterium des Verlaufs der angezeigten Welle in der Ultraschallscandatei (USSD) zur inneren und/oder äusseren Oberfläche der Schweissnaht und des Rohres beinhaltet.

5. Computer implementiertes Verfahren nach Anspruch 3, **dadurch gekennzeichnet, dass** die Bewertung zur Qualität der Ultraschallscandatei (USSD) das Kriterium des Verlaufs der Wandstärke in der Ultraschallscandatei (USSD) der Schweissnaht und des Rohres beinhaltet.

6. Computer implementiertes Verfahren nach Anspruch 3, **dadurch gekennzeichnet, dass** die Bewertung zur Qualität der Ultraschallscandatei (USSD) das Kriterium des Vorliegens eines Heizdrahts in der Ultraschallscandatei (USSD) beinhaltet.

7. Computer implementiertes Verfahren nach Anspruch 2, **dadurch gekennzeichnet, dass** eine Prüfgruppe die Qualität der Schweissung (2 QWELD) definiert.

8. Computer implementiertes Verfahren nach Anspruch 1, **dadurch gekennzeichnet, dass** die Bewertung der Qualität der Schweissung mindestens eines der folgenden Kriterien beinhaltet: Anomalien, Defekte oder uneinheitliche, nicht erwartete Strukturen in der Ultraschallscandatei, kein Heizdraht auffindbar.

9. Computer implementiertes Verfahren nach Anspruch 1 bis 8, **dadurch gekennzeichnet, dass** die Ultraschallprüfung zum Erstellen der Ultraschallscandatei (USSD) mittels der Time of Flight Diffraction (TOFD) oder der Phased Array Ultraschallprüfung (PAUT) durchgeführt und erstellt wurde.

10. System zur Bewertung einer nicht zerstörenden Ultraschallprüfung einer Kunststoffrohrverschweissung beinhaltend, ein Ultraschallscanner zum Durchführen eines Ultraschallscans einer Kunststoffrohrverschweissung und zum Erstellen einer Ultraschallscandatei (USSD), ein Server, zum Empfangen der Ultraschallscandatei (USSD), eine Recheneinheit zum Analysieren der Ultraschallscandatei (USSD) und zur Bewertung der Ultraschallscandatei aufgrund der vordefinierten Kriterien, wobei die Recheneinheit ein neuronales Netzwerk umfasst und eine Ausgabeeinheit (OUTPUT) zur Anzeige der Bewertung.

11. System nach Anspruch 10, **dadurch gekennzeichnet, dass** der Server eine webbasierte Schnittstelle aufweist.

12. Verfahren zum Trainieren eines neuronalen Netzwerks zur Verwendung in einem Verfahren zur Bewertung einer nicht zerstörenden Ultraschallprüfung einer Kunststoffrohrverschweissung vorzugsweise nach einem der Ansprüche 1 bis 9, das folgende Schritte beinhaltet:
• Erstellen von simulierten Ultraschallscandatei (USSD) mittels des neuronalen Netzwerks der Recheneinheit aufgrund bekannter Ultraschallscandateien (USSD) unterschiedlicher Materialien,
• Bewerten der Ultraschallscandateien (1 USSD, 2 QWELD) aufgrund vordefinierter Kriterien
• Kontinuierliche Erweiterung des neuronalen Netzwerks aufgrund der simulierten Ultraschallscandateien (USSD).

13. Verfahren nach Anspruch 12, **dadurch gekennzeichnet, dass** mindestens eines der vordefinierten Kriterien, ein Verlauf der angezeigten Welle in der Ultraschallscandatei zur äusseren oder inneren Oberfläche der Schweissnaht und des Rohres, ein Verlauf der Wandstärke in der Ultraschallscandatei der Schweissnaht und des Rohres, eine Anomalie, ein Defekt oder eine uneinheitliche, nicht erwartete Struktur in der Ultraschallscandatei oder kein Heizdraht auffindbar ist.

14. Verfahren nach Anspruch 12 **dadurch gekennzeichnet, dass** das neuronale Netzwerk ein konvolutionales neuronales Netzwerk (CNN) ist.
